Europäisches Patentamt

European Patent Office

Office européen des brevets

(11) Publication number: **0 151 321**
**A1**

# (12) EUROPEAN PATENT APPLICATION

(21) Application number: **84201547.1**

(22) Date of filing: **29.10.84**

(51) Int. Cl.⁴: **B 60 J 7/195**

(30) Priority: **08.12.83 NL 8304234**

(43) Date of publication of application:
**14.08.85 Bulletin 85/33**

(84) Designated Contracting States:
**AT BE CH DE FR GB IT LI NL SE**

(71) Applicant: **Vermeulen-Hollandia Octrooien II B.V.**
**Küppersweg 9-11**
**NL-2031 EA Haarlem(NL)**

(72) Inventor: **Boots, Robert Theodoor**
**Saeftinge 97**
**NL-2036 GZ Haarlem(NL)**

(74) Representative: **Jacobson, Gerard et al,**
**Octrooibureau Los en Stigter B.V. Postbus 20052**
**NL-1000 HB Amsterdam(NL)**

(54) Elastic seal for a displaceable panel of an open roof construction for a vehicle; as well as displaceable panel of an open roof construction for a vehicle, provided with this elastic seal.

(57) The invention relates to an elastic seal for a displaceable panel 1 of an open roof construction for a vehicle, consisting of an elongated sealing section 2 of rubber or the like material.

According to the invention the sealing section 2 may be bent in its transverse direction into a U-shape along the edge area 6 of the panel 1. A plurality of spaced catching means 3 are provided on the side of the sealing section 2 which lies on the inner side in the bent position, which catching means 3 may be catchingly brought into engagement with additional catching means 8, 9 of the panel 1. The lateral edge portions 4 of the sealing section 2 have a cured shape in the non-mounted position, so that these lateral edge portions 4 are bent backward during mounting and come into sealing engagement with the bottom surface and with the upper surface of the edge area 6 of the panel 1.

fig.1

EP 0 151 321 A1

Croydon Printing Company Ltd.

ELASTIC SEAL FOR A DISPLACEABLE PANEL OF AN OPEN ROOF
CONSTRUCTION FOR A VEHICLE; AS WELL AS DISPLACEABLE
PANEL OF AN OPEN ROOF CONSTRUCTION FOR A VEHICLE,
PROVIDED WITH THIS ELASTIC SEAL.

The invention relates to an elastic seal for a displaceable panel of an open roof construction for a vehicle, consisting of an elongated sealing section of rubber or the like material; as well as to a displaceable panel of an open roof construction for a vehicle, provided with this elastic seal.

It is an object of the present invention to provide an elastic seal of this kind, which may be very easily mounted on the displaceable panel and which offers still further advantages.

For this purpose the elastic seal according to the invention is characterized in that the sealing section may be bent in its transverse direction into a U-shape along the edge area of the panel, while a plurality of spaced catching means are provided on the side of the sealing section which lies on the inner side in the bent position, which catching means may be catchingly brought into engagement with additional catching means of the panel, the lateral edge portions of the sealing section having a curved shape in the non-mounted position, so that these lateral edge portions are bent backwards during mounting and come into sealing engagement with the bottom surface and with the upper surface of the edge area of the panel.

According to the invention the elastic sealing section may be bent in a U-shape and be catchingly mounted along the entire circumference of the panel, so that the lateral edge portions of the sealing section come into pretensioned engagement with the upper and lower surface of the panel. In this way a penetration of liquid between the panel and the sealing section is prevented in an efficient manner.

Preferably the catching means of the sealing section consist of two catch cams, which adjoin the said lateral edge portions of the sealing section.

Further, the sealing section may be provided with sealing means, such as nylon hairs or the like on the side remote from the catching means, in the central area.

The invention further relates to a displaceable panel of an open roof construction for a vehicle, provided with the elastic seal described hereinbefore.

According to the invention this displaceable panel is characterized in that it carries additional catching means.

In the case that the displaceable panel consists of a transparent plate member and an edge section fastened underneath the plate member and extending along the circumference thereof, it is proposed according to the invention that the edge section protrudes beyond the plate member along the entire circumference of the plate member, while an upper and a lower additional catch arm are formed on the protruding portion of the edge section, which additional catch cams are in engagement with the catch cams of the sealing section, the one lateral edge portion of the sealing section sealingly resting on the transparent plate member and the other lateral edge portion of the sealing section being in sealing engagement with the lower surface of the edge section.

The invention will hereafter be elucidated with reference to the drawing, which shows an embodiment of an elastic seal for a displaceable panel of an open roof construction for a vehicle by way of example.

Fig. 1 is a cross-section of an embodiment of an elastic seal according to the invention before mounting.

Fig. 2 is a cross-section of the elastic seal according to fig. 1, after the same is mounted on a displaceable panel of an open roof construction for a vehicle.

The drawing shows by way of example an embodiment of an elastic seal according to the invention for a displaceable panel 1 of an open roof construction for a vehicle. This elastic seal consists of an elongated sealing section 2 of rubber, polyvinylchloride or the like material.

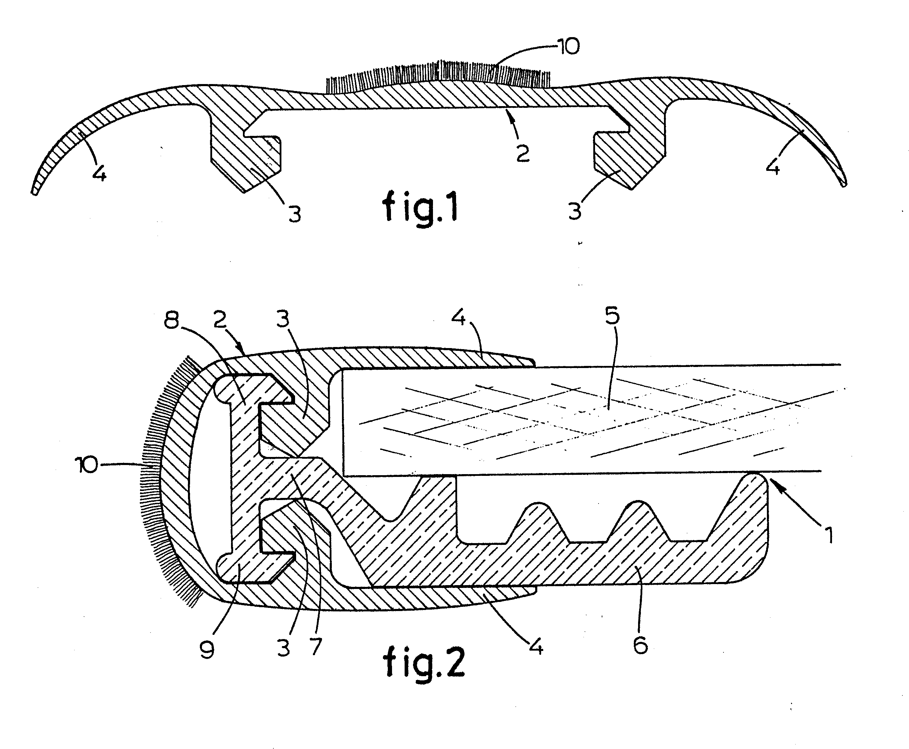

This sealing section 2 may be bent in its transverse direction to a U-shape around the edge area of the panel 1. A pair of spaced catch cams 3 is provided on the side of the sealing section 2, which lies on the inner side in the bent position. In the non-mounted position shown in fig. 1 the lateral edge portions 4 of the sealing section 2 have a curved shape. The catch cams 3 adjoin these lateral edge portions 4 of the sealing section 2.

In the embodiment according to fig. 2 the panel 1 consists of a transparent plate member 5 and an edge section 6 mounted underneath this plate member 5, e.g. by means of glueing and extending along the circumference thereof. The edge section 6 may be formed of aluminium or artificial material. This edge section 6 protrudes beyond the plate member 5 along the entire circumference of the plate member 5, while an upper and a lower catch cam 8, 9 are formed on this protruding portion 7 of the edge section, which catch cams 8, 9 come into catching engagement with the catch cams 3 of the sealing section 2.

On mounting the sealing section 2 the lateral edge portions 4 of the sealing section 2 are bent backwards, so that the upper lateral edge portion 4 of the sealing section 2 sealingly comes to rest on the transparent plate member 5, while the lower lateral edge portion 4 of the sealing section 2 comes into sealing engagement with the lower surface of the edge section 6.

The sealing section 2 is provided with sealing means, such as nylon hairs 10 or the like on the outer side, in the central area.

The invention is not limited to the embodiment shown in the drawing by way of example, which may be varied in several ways within the scope of the invention.

**0151321**

## Claims:

1. Elastic seal for a displaceable panel of an open roof construction for a vehicle, consisting of an elongated sealing section of rubber or the like material, c h a r a c t e r i z e d in that the sealing section may be bent in its transverse direction into a U-shape along the edge area of the panel, while a plurality of spaced catching means are provided on the side of the sealing section which lies on the inner side in the bent position, which catching means may be catchingly brought into engagement with additional catching means of the panel, the lateral edge portions of the sealing section having a curved shape in the non-mounted position, so that these lateral edge portions are bent backward during mounting and come into sealing engagement with the bottom surface and with the upper surface of the edge area of the panel.

2. Elastic seal according to claim 1, c h a r a c t e r i z e d in that the catching means of the sealing section consist of two catch cams, which adjoin the said lateral edge portions of the sealing section.

3. Elastic seal according to claim 1 or 2, c h a r a c t e r i z e d in that the sealing section is provided with sealing means, such as nylon hairs or the like on the side remote from the catching means, in the central area.

4. Displaceable panel of an open roof construction for a vehicle, provided with an elastic seal according to any one of the preceding claims, c h a r a c t e r i z e d in that the panel carries additional catching means.

5. Displaceable panel according to claim 4, consisting of a transparent plate member and an edge section fastened underneath the plate member and extending along the circumference thereof, c h a r a c t e r i z e d in that the edge section protrudes beyond the plate member along the entire circumference of the plate member, while an upper and a lower additional catch arm are formed on the protruding portion of the edge section, which additional catch cams are in engagement with the catch cams of the sealing section, the one lateral edge portion of the sealing section sealingly resting on the transparent plate member and the other lateral edge portion of the sealing section being in sealing engagement with the lower surface of the edge section.

0151321

1/1

fig.1

fig.2

European Patent
Office

**EUROPEAN SEARCH REPORT**

0151321
Application number

EP 84 20 1547

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-3 136 853 (WEBASTO)<br><br>* Page 8, lines 18-24; page 9, lines 15-18; figures 3,9 *<br><br>--- | 1 | B 60 J 7/18 |
| A | FR-A-2 493 238 (WEBASTO)<br><br>* Page 3, lines 9-35; figure 2 *<br><br>--- | 1 | |
| A | FR-A-2 454 924 (WEBASTO)<br><br>* Page 4, lines 4-11; figure 3 *<br><br>--- | 1 | |
| A | DE-C-1 215 009 (HAPPICH)<br><br>* Column 4, line 67 - column 5, line 20; figures 1-3 *<br><br>--- | 2 | **TECHNICAL FIELDS SEARCHED (Int. Cl.4)**<br><br>B 60 J 7/<br>B 60 J 5/<br>B 60 R 13/ |
| A | DE-A-3 140 050 (WEBASTO)<br><br>* Page 1, lines 4-9; figures 2,3 *<br><br>--- | 3 | |
| A | GB-A- 987 565 (SCHLEGEL)<br><br>* Page 2, lines 65-104; figures 6,7 *<br><br>---<br><br>-/- | 1 | |

The present search report has been drawn up for all claims

| Place of search | Date of completion of the search | Examiner |
|---|---|---|
| THE HAGUE | 13-03-1985 | AYITER I. |

European Patent
Office

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl.4) |
| A | DE-B-1 116 983 (HAPPICH) | | |
| | --- | | |
| A | US-A-1 601 000 (E.G.SIMPSON) | | |
| | ----- | | |
| | | | |
| | | | **TECHNICAL FIELDS SEARCHED (Int. Cl.4)** |
| | | | |

The present search report has been drawn up for all claims

| Place of search | Date of completion of the search | Examiner |
|---|---|---|
| THE HAGUE | 13-03-1985 | AYITER I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82